# FASCICULE DE BREVET EUROPEEN

(11) **EP 0 712 018 B1**
(45) Date de publication et mention de la délivrance du brevet: **14.08.2002**
(21) Numéro de dépôt: 95402473.3
(22) Date de dépôt: 06.11.1995
(51) Int. Cl.: G02B 6/44

(54) **Cassette pour le logement et la protection d'une fibre optique et installation pour le stockage de fibres optiques**
Kassette zur Unterbringung und zum Schutz einer optischen Faser und Anordnung zur Lagerung von optischen Fasern
Cassette for the housing and protection of an optical fibre and installation for the storage of optical fibres

(30) Priorité: 14.11.1994 FR 9413619
(43) Date de publication de la demande: 15.05.1996
(73) Titulaire: FRANCE TELECOM, 75015 Paris (FR)
(72) Inventeur: Crespel, Daniel, F-22300 Lannion (FR); Burgade, Etienne, F-93100 Montreuil (FR); Pousson, Claude, F-34980 Saint-Gely du Fesc (FR)
(74) Mandataire: Armengaud Ainé, Alain

(56) Documents cités:
- EP-A- 0 185 923
- FR-A- 2 567 657
- FR-A- 2 600 781
- US-A- 4 666 240
- US-A- 4 793 682
- US-A- 5 263 585

## Description

La présente invention est relative à une cassette destinée à permettre individuellement le logement et la protection de l'extrémité d'une fibre optique unique gainée, de manière à autoriser notamment la délivrance d'une longueur suffisante de cette fibre à l'extérieur de cette cassette pour réaliser, en bout de la partie de la fibre ainsi extraite de la cassette son raccordement avec l'extrémité d'une autre fibre optique gainée par sa propre extrémité, ou bien sur une partie dénudée de celle-ci, ou encore avec un appareil d'utilisation, sans introduire de contraintes de traction ou de flexion sur ces fibres, telles que celles-ci puissent en particulier être endommagées.

Dans ce qui suit, il doit être entendu que le terme fibre optique est pris ici dans un sens général et désigne aussi bien une fibre unique, revêtue extérieurement d'une gaine de protection, qu'un ruban unitaire formé par l'association d'un nombre limité de telles fibres gainées, disposées côte à côte et noyées dans un revêtement externe commun assurant la cohésion de ce ruban. Dans ce dernier cas et comme avec une fibre unique gainée, il est encore plus nécessaire de pouvoir disposer d'une surlongueur appropriée pour pouvoir extraire du ruban une quelconque des fibres associées qui le constituent, afin de réaliser la liaison de cette fibre avec une autre de la façon précisée plus haut.

On sait que dans les réseaux de télécommunications à fibres optiques, celles-ci se présentent généralement sous la forme d'un élément très fin, de grande longueur mais de diamètre extrêmement réduit, de l'ordre notamment de 125 micrométres, recouverts d'une gaine faisant passer son diamètre à 250 micrométres environ. De telles fibres sont donc fragiles et en particulier ne doivent pas être contraintes en flexion avec un rayon en principe inférieur à 37,5 mm, soit un diamètre de 75 mm, du moins selon les normes actuellement en vigueur.

De plus, lorsqu'il convient de raccorder l'extrémité libre d'une telle fibre à un appareil d'utilisation quelconque ou à l'extrémité d'une autre fibre par une épissure appropriée, réalisée après dénudage de la gaine et aboutement des deux fibres à raccorder, cette liaison étant obtenue par des moyens mécaniques ou autres notamment par brasage, soudage ou collage, il est nécessaire de pouvoir disposer d'une surlongueur suffisante de fibre hors de la cassette, qui est généralement comprise entre 0,80 m et 3 m.

Il convient donc de pouvoir gérer une telle surlongueur, en réalisant le stockage adéquat de la fibre, notamment à son extrémité , sans créer de contraintes sur celle-ci lors de son extraction ou de son effacement hors ou dans la cassette, tout en permettant de disposer à la demande de cette surlongueur sur une dimension convenable, cette cassette devant pouvoir en outre accommoder l'épissure réalisée à l'extrémité de la fibre, qui présente une surépaisseur généralement non négligeable.

Par ailleurs, on sait que dans les réseaux actuels, les câbles à fibres optiques comportent un nombre élevé de telles fibres, parfois disposées en rubans multiples et arrangées de façon contigüe les unes aux autres. Il est donc indispensable que le stockage de l'ensemble de ces fibres soit tel qu'il permette d'en extraire une exactement choisie, sans perturber les autres et notamment sans risquer de léser, voire de rompre une ou plusieurs de ses voisines, notamment lors du tirage de la surlongueur nécessaire et de sa remise en place, avec ou sans l'épissure réalisée à son extrémité.

Les solutions actuelles, comme par exemple selon le brevet FR 2 567 657, ne sont pas bien adaptées, notamment puisque les boîtiers ou autres conteneurs qui reçoivent l'extrémité des fibres optiques, sont communs à un nombre généralement élevé de celles-ci, ce qui occasionne fréquemment des encombrements ou un mélange des fibres entre elles lors du tirage de la surlongueur sur l'une quelconque d'entre elles.

De plus, ces boîtiers ne permettent pas généralement de loger les épissures du fait de leur surépaisseur, obligeant à les fixer par un adhésif à l'extérieur du boîtier correspondant, ce qui conduit à un risque accru de détérioration lors de l'opération suivante de raccordement avec une autre fibre extraite du boîtier, ceci sans perturber le faisceau qui constitue le câble.

Surtout dans les réalisations actuelles, les fibres sont enroulées sur un noyau central, solidaire du boîtier où se logent ces fibres, et dont la présence au centre de la chambre interne à ce boîtier permet à chaque fibre de ne pas franchir le seuil de courbure minimal précité. Or, lorsque l'on tire sur l'extrémité d'une fibre pour extraire la surlongueur souhaitée, la fibre s'enroule sur le noyau fixe, en produisant un effet de cabestan qui provoque rapidement son blocage et sa rupture quasi certaine, si l'effort de traction visant à l'extraire est poursuivi. Les brevets US 5 263 585 et EP 0 185 923 illustrent des exemples de telles réalisations.

Au total, les solutions classiques ne permettent pas une organisation rationnelle et individuelle des fibres, et de fournir pour chacune d'elles, de façon indépendante, une surlongueur adéquate sans perturber les autres fibres qui sont disposées au voisinage de la précédente. Elles ne permettent pas non plus un repérage précis et un classement des fibres et des épissures, ainsi que l'identification sûre de celles-ci. Elles sont d'un emploi peu pratique, exigent une main-d'oeuvre spécialisée et bien formée pour sortir ou rentrer la surlongueur désirée, ne permettent pas un rangement approprié des épissures, sont d'un prix de revient élevé et enfin présentent des risques fréquents de rupture pour les fibres, avec les inconvénients graves qui en résultent pour le réseau.

L'invention concerne une cassette de stockage et de protection qui évite ces inconvénients.

A cet effet, la cassette considérée, pour le logement et la protection individuelle d'une portion terminale d'une fibre optique unique ou d'un ruban unitaire formé par une association de telles fibres, comportant un boîtier plat présentant un fond pourvu à sa périphérie d'un rebord et au moins une entrée et au moins une sortie pour ladite portion terminale de fibre ou de ruban, l'intérieur dudit boîtier plat contenant en son centre un noyau cylindrique faisant saillie du fond du boîtier de façon à délimiter, entre la surface externe dudit noyau et le fond et le rebord périphérique du boîtier, un logement annulaire pour le stockage de ladite portion terminale de fibre ou de ruban, laquelle est destinée à être enroulée librement autour dudit noyau cylindrique selon un nombre de tours suffisant pour fournir à l'extérieur du boîtier une surlongueur désirée consécutivement à une traction exercée sur son extrémité à l'extérieur dudit boîtier, se caractérise en ce que ledit noyau cylindrique est monté tournant sur le fond du boîtier, autour d'un pivot central perpendiculaire audit fond, et ledit fond du boîtier comporte un lamage en creux dans lequel pénètre la face inférieure du noyau tournant avec un jeu latéral limité, notamment inférieur au demi-diamètre de la fibre, de façon à permettre, lors de l'extraction par tirage de ladite surlongueur désirée hors du boîtier, l'entraînement en rotation conjoint du noyau central et des tours d'enroulement se resserrant contre le noyau, et donc la libération d'un nombre donné de tours d'enroulement sur le noyau, tout en évitant tout blocage sur ledit noyau central desdits tours d'enroulement resserrés.

Avantageusement, la face supérieure du noyau tournant est solidarisée d'un flasque plat, parallèle au fond du boîtier et obturant partiellement par le dessus le logement circulaire de réception de la fibre.

Selon une autre caractéristique, le rebord périphérique externe du boîtier comporte un couvercle plat annulaire, dirigé vers le pivot central du noyau tournant, sensiblement dans le plan du flasque et délimitant avec le côté de celui-ci un jeu d'espacement suffisant pour permettre le passage de la fibre.

Dans un mode de réalisation préféré de l'invention, le boîtier présente une section droite de forme carrée ou rectangulaire, le couvercle annulaire étant formé de quatre éléments séparés, chacun de ces éléments étant disposé selon un des quatre côtés respectifs du boîtier, chaque élément de couvercle étant réalisé au moyen d'une languette souple de matière plastique, avantageusement transparente, comportant un bord extérieur circulaire dirigé vers le centre du boîtier et s'étendant sensiblement parallèlement au côté du flasque porté par le noyau tournant.

Selon encore une autre caractéristique, le bord périphérique du boîtier comporte, dans chacun des quatre angles de celui-ci, un passage d'entrée et/ou de sortie de la fibre logée dans ce boîtier, ces passages étant disposés deux à deux selon les diagonales du boîtier.

Avantageusement, les portions de raccordement de chaque passage avec le logement de réception circulaire de la fibre à l'intérieur du boîtier présentent un profil arrondi, afin de ne pas léser la fibre qui s'engage dans ce passage.

Selon encore une caractéristique particulière du boîtier considéré, celui-ci comporte, à l'extérieur du logement de réception circulaire, selon ses côtés latéraux, des encoches ouvertes vers l'extérieur, pour la fixation ou la suspension du boîtier.

De préférence, ces encoches présentent un contour en oméga avec une partie étroite vers l'extérieur, raccordée à une partie sensiblement circulaire vers l'intérieur.

Dans un mode de réalisation également préféré, chaque passage dans un angle du boîtier comporte un évidement médian, sensiblement circulaire, pour le montage d'un organe de fixation de la gaine externe de la fibre.

Avantageusement, cet organe de fixation est constitué de deux rondelles plates circulaires, serrant la gaine plan sur plan et maintenues l'une contre l'autre par des vis ou analogues.

Lorsque la cassette est prévue pour contenir une épissure de raccordement de la fibre optique avec une autre fibre, le logement de réception comporte, dans une première variante de réalisation, à l'intérieur du boîtier et contre la face interne du rebord périphérique de celui-ci, au moins une zone rectiligne allongée pour la mise en place de cette épissure, introduite dans le boîtier sous la languette souple formant l'élément correspondant du couvercle.

De préférence, la languette du couvercle comporte des pattes, en saillie vers l'intérieur du logement de réception circulaire, pour immobiliser l'épissure de raccordement contre la zone rectiligne, laquelle est prévue sur la face interne de ce logement, à l'intérieur du boîtier.

En variante, l'épissure est fixée sur le noyau cylindrique tournant, au voisinage du logement de réception.

L'invention concerne également une installation pour le stockage de fibres optiques ou de rubans unitaires formés par une association de telles fibres, comportant une pluralité de cassettes du genre précité, ainsi qu'un dispositif de stockage ou de support desdites cassettes, qui se caractérise en ce qu'elle comprend au moins une tige de support de ces cassettes, qui traverse les encoches homologues de leurs boîtiers respectifs afin de les solidariser entre eux plan sur plan, sans entraver la possibilité de basculement de l'un quelconque de ceux-ci autour de cette tige de support.

Avantageusement, la tige de support comporte un méplat permettant de bloquer les cassettes pour une position de la tige à l'intérieur de l'évidement médian des encoches en oméga ou bien d'autoriser l'échappement de cette tige vis-à-vis de ces encoches dans une autre position perpendiculaire à la première, dans laquelle le méplat s'engage dans la partie étroite vers l'extérieur des encoches.

De préférence également, le dispositif comporte des moyens de verrouillage des cassettes, notamment constitués par un couvercle disposé selon le côté opposé des boîtiers, ce couvercle comportant des retours perpendiculaires, propres à s'engager dans les parties étroites des encoches, prévues dans ce côté opposé.

D'autres caractéristiques d'une cassette pour le logement et la protection d'une fibre optique et d'un dispositif pour stocker une pluralité de telles cassettes plan sur plan, réalisés conformément à l'invention, apparaîtront encore à travers la description qui suit de plusieurs exemples de réalisation, donnés à titre purement indicatif et non limitatif, en référence aux dessins annexés sur lesquels :
- La Figure 1 est un schéma de principe qui illustre le principe de raccordement de l'extrémité d'une fibre optique avec une autre fibre et la nécessité de pouvoir utiliser à cet effet une surlongueur disponible à la demande.
- La Figure 2 est une vue de dessus, à plus grande échelle, d'une cassette de stockage d'une fibre optique, réalisée conformément à l'invention.
- La Figure 3 est une vue en coupe transversale, à plus grande échelle, selon la ligne III-III de la Figure 2.
- La Figure 4 représente en perspective un dispositif pour le rangement et l'utilisation individuelle d'un ensemble de cassettes selon la Figure 2.
- La Figure 5 est une vue de détail, à plus grande échelle, d'un organe de fixation des fibres mises en oeuvre avec les cassettes des Figures 2 et 4.

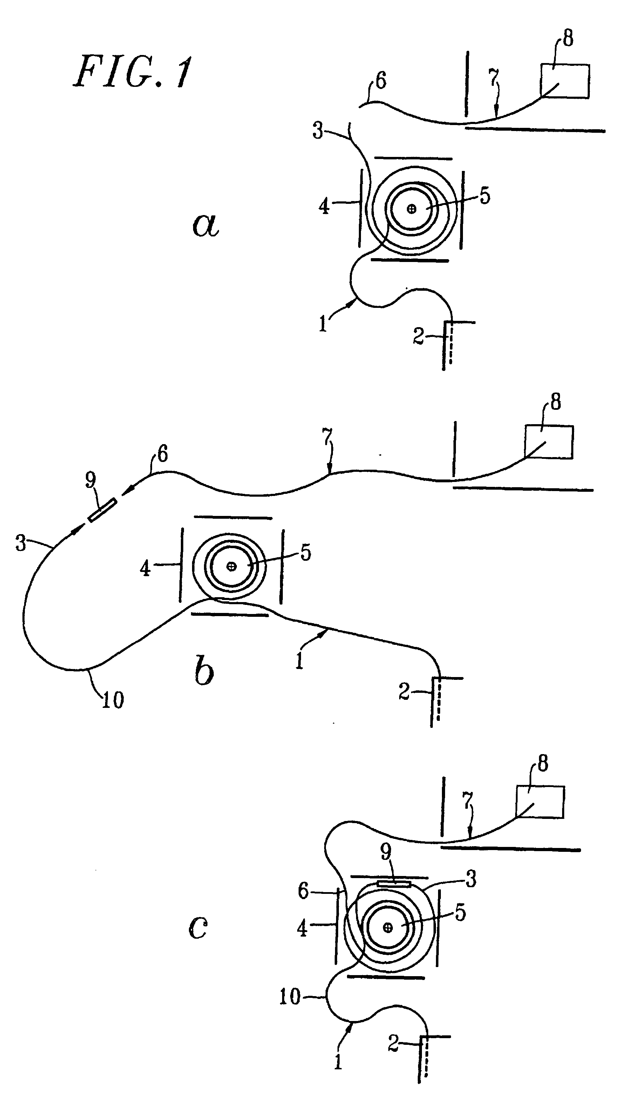

Sur la Figure 1, et plus particulièrement sur le schéma (a) de celle-ci, on a désigné sous la référence 1, une fibre optique provenant d'un câble de transmission 2, et dont la portion terminale 3 est logée dans une cassette 4, également représentée ici de la manière la plus succincte et dont le détail de la réalisation sera bien entendu précisé ci-après.

Comme déjà indiqué, la fibre optique 1 peut être soit une fibre unique gainée, soit un ruban unitaire formé de telles fibres associées en étant disposées voisines l'une de l'autre et noyées dans une gaine externe. Dans ce qui suit, on raisonnera sur une fibre unique, la mise en oeuvre d'un ruban conduisant aux mêmes considérations.

A l'intérieur de la cassette 4, la portion terminale 3 de la fibre est lovée autour d'un noyau central 5 et émerge à l'extérieur par un des angles de la cassette. Par hypothèse, l'extrémité de cette portion terminale 3 doit notamment être raccordée à l'extrémité homologue 6 d'une second fibre 7, pour assurer une liaison souhaitée avec un appareil d'utilisation quelconque, illustré sous la référence 8.

Comme représenté sur le schéma (b), on comprend aisément que, pour la réalisation d'une épissure de liaison 9 dont le détail importe peu en lui-même à l'invention, mais qui se présente usuellement avec la taille et la forme d'une allumette, cette épissure pouvant être effectuée par des moyens mécaniques ou encore par soudage, collage ou brasage, il soit nécessaire de disposer à l'extérieur de la cassette notamment d'une surlongueur de fibre 10, permettant les débattements nécessaires pour abouter celle-ci avec l'extrémité 6 de la fibre 7 à laquelle elle doit être reliée, sans contraindre ces fibres de façon excessive et notamment sans que leurs courbures respectives dépassent une limite déterminée, au-delà de laquelle la flexion créée risque de produire une rupture de l'une ou de l'autre des fibres considérées.

Enfin, une fois l'épissure 9 réalisée, il convient de pouvoir stocker la surlongueur 10 préalablement extraite de la cassette 4, de manière à éviter que celle-ci ne reste à l'extérieur de cette dernière, avec les risques d'être tirée, accrochée ou manipulée indûment, en provoquant à nouveau une rupture interrompant la liaison entre le câble 2 et l'appareil 8, et en exigeant par conséquent une nouvelle intervention.

Le schéma (c) de la Figure 1 montre comment l'épissure 9 et la surlongueur 10 doivent ainsi pouvoir être logées à l'intérieur de la cassette, les parties extérieures des extrémités 3 et 6 des deux fibres 1 et 2 étant réduites au maximum. Notamment et comme précisé plus loin, l'épissure peut être montée à l'intérieur de la cassette 4 dans une partie fixe de celle-ci, ou bien être portée par le noyau central 5 de cette même cassette, dont la structure et la mise en oeuvre constituent les éléments essentiels de la présente invention.

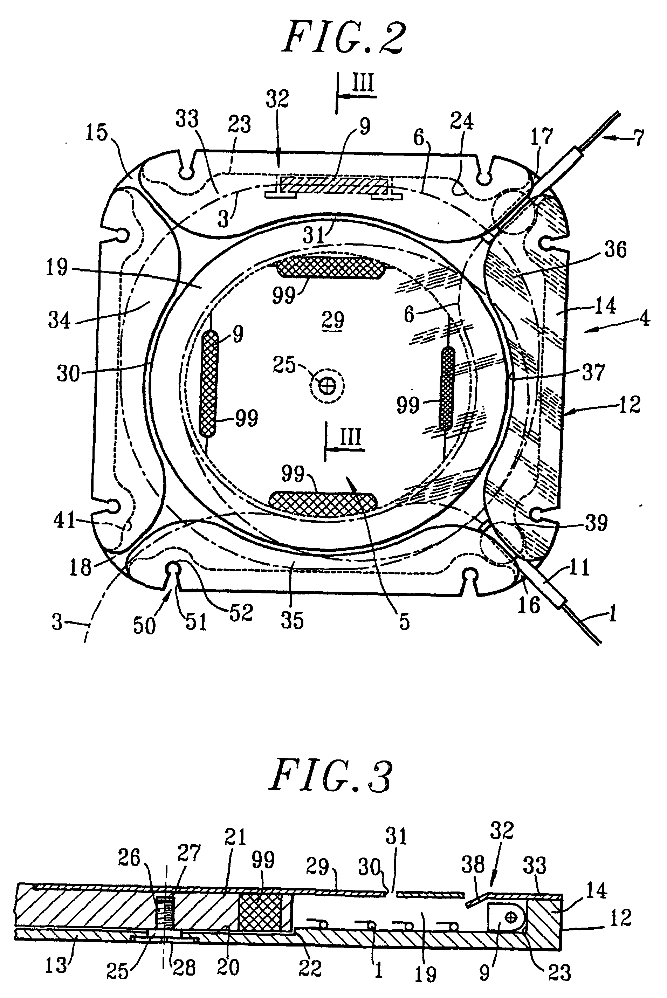

Les Figures 2 et 3 illustrent à plus grande échelle le détail de la réalisation de la cassette 4 pour le stockage de la portion terminale dénudée 3 d'une fibre optique 1, notamment par enlèvement préalable de la gaine externe 11 qui entoure normalement cette fibre dans la partie courante de celle-ci.

La cassette 4 se compose principalement d'un boîtier 12, constitué d'un fond plat 13 et d'un bord périphérique 14 s'étendant perpendiculairement à partir de ce fond.

Avantageusement, le boîtier 12 est réalisé en un matériau métallique ou plastique approprié, léger, facile à usiner ou mouler et aisé à manipuler. De préférence également, ce boîtier présente un profil carré avec, dans chacun de ses quatre coins, des passages, respectivement 15 et 16, 17 et 18, deux à deux opposés selon chacune des diagonales du boîtier, par lesquels les fibres 1 et 7 et notamment leurs extrémités 3 et 6, peuvent entrer ou sortir selon le cas du logement 19 délimité à l'intérieur de ce boîtier par le fond 13 et le rebord périphérique 14 de celui-ci.

Conformément à l'invention, le fond 13 du boîtier 12 comporte un lamage central 20, dans lequel est monté le noyau 5 de la cassette, ce noyau étant constitué d'un élément cylindrique 21, s'engageant à l'intérieur du lamage en délimitant avec le bord latéral de celui-ci un jeu étroit 22, au plus égal au demi-diamètre de la fibre 1 (ou de la fibre 7), dénudée, disposée dans le logement 19, lequel présente un profil circulaire vers l'élément cylindrique 21 du noyau 5 et des zones rectilignes 23 dans chacun des quatre côtés du bord périphérique 14.

De préférence, lors de l'usinage ou du moulage du boîtier, son bord périphérique 14 est réalisé de telle sorte qu'il présente des portions de raccordement 24, entre les zones rectilignes 23 et chacun des passages 15 à 18 d'entrée ou de sortie des fibres, qui sont convenablement arrondies de manière à éviter la présence de tout angle vif susceptible éventuellement de léser l'extrémité dénudée 3 ou 6 de la fibre correspondante disposée à l'intérieur du logement 19.

Selon l'invention, l'élément cylindrique 21 du noyau central 5 est monté tournant à l'intérieur du boîtier 12 de la cassette 4, en étant par exemple solidarisé du fond plat 13 au moyen d'un pivot 25 muni axialement d'une partie filetée 26 coopérant avec un alésage borgne 27, convenablement taraudé, prévu au centre de l'élément 21, le pivot 25 étant arrêté par une tête 28 sous le fond 13, permettant de visser la partie filetée 26 dans cet alésage borgne 27.

A son extrémité opposée au fond 13, l'élément 21 du noyau 5 comporte un flasque plat 29, s'étendant parallèlement à ce fond et délimitant ainsi par le dessus le logement 19. Ce flasque 29 présente un bord extérieur 30 circulaire et délimite un jeu étroit 31 avec un couvercle 32 solidarisé du bord périphérique 14 du boîtier 12, le flasque 29 et le couvercle 32 étant disposés sensiblement dans le même plan, la hauteur de l'élément 21 étant déterminée par construction pour correspondre sensiblement à celle du bord 14.

Le jeu 31 est déterminé avec une largeur suffisante pour laisser pénétrer la fibre dans le logement de la cassette mais néanmoins assez limitée pour éviter que cette fibre ne s'échappe à l'extérieur du fait de son élasticité propre, la fibre étant ainsi piégée sous le flasque 29 et le couvercle 32.

Avantageusement, le couvercle 32 est réalisé en quatre éléments distincts mais identiques, respectivement 33, 34, 35 et 36, chacun de ces éléments présentant un bord 37 dirigé vers le noyau ayant un profil incurvé de manière à suivre celui du bord extérieur 30 du flasque 29, en délimitant avec ce dernier le jeu 31 précité, lequel correspond sensiblement à celui des fibres optiques 1 ou 7 aboutissant à la cassette 4, afin le cas échéant de faciliter leur mise en place dans le logement circulaire 19.

En outre, les quatre éléments 33 à 36 du couvercle 32 sont réalisés à l'aide de plaquettes en un matériau plastique relativement souple, de préférence transparent, ces éléments étant collés ou autrement fixés contre le bord 24 du boîtier au droit de chacune des zones rectilignes 23 de celui-ci, et s'étendant à partir de celles-ci vers le noyau 5.

Notamment, la souplesse des éléments du couvercle 32 permet de soulever facilement un quelconque d'entre eux afin de loger dans le boîtier l'épissure 9 une fois celle-ci effectuée en bout des extrémités 3 et 6 des deux fibres, l'épissure étant appliquée contre le bord 14 dans la zone correspondante (sur le dessin la zone 23 sous l'élément 33). De préférence également, chaque élément de couvercle comporte des pattes 38, rabattues vers l'intérieur du logement 19 pour bloquer en position l'épissure, comme l'illustre notamment la Figure 3.

Toutefois et comme le montre également la Figure 2, l'épissure réalisée, désignée dans ce cas sous la référence 99, peut être directement portée par le noyau cylindrique 5 monté rotatif dans le boîtier 12, ce qui présente l'avantage de pouvoir effectuer autour de ce noyau plusieurs enroulements des deux extrémités des fibres réunies par cette épissure, sans limiter la dimension de la surlongueur, contrairement à ce qui peut le cas échéant se produire lorsque l'épissure 9 est fixée sur le boîtier dans une partie fixe de celui-ci.

Les épissures 99 peuvent être logées dans des cavités appropriées du noyau tournant (non représentées pour ne pas surcharger le dessin), mais qui peuvent être formées à chaque fois par un simple évidement de dimensions convenables. Ces cavités peuvent être réparties sur la périphérie du noyau, et être notamment au nombre de un à quatre. Les épissures 99 sont mises en place dans leurs cavités grâce à la souplesse du flasque 29 qui peut être légèrement déplacé vers l'extérieur pour permettre le passage nécessaire avant de revenir en place en maintenant chaque épissure dans sa cavité.

L'équipement de la cassette 4 se complète, d'une part à l'aide d'un organe de fixation 39 pour chacune des fibres au droit de sa pénétration dans le boîtier 12, ici pour la fibre 1 à travers l'entrée 16, pour la fibre 7 à travers l'entrée 17, d'autre part en aménageant ce boîtier de manière à lui permettre une présentation facile, à partir d'un dispositif de stockage 40 d'une pluralité de telles cassettes.

L'organe de fixation 39 est notamment aménagé de manière à venir s'emboîter dans un logement de réception approprié 41, ici de forme circulaire, prévu par construction dans le bord périphérique 14 du boîtier au droit de chacun des passages 15 à 18 d'entrée ou de sortie des fibres.

Avantageusement et comme illustré à plus grande échelle sur la Figure 5, cet organe de fixation 39 est simplement constitué au moyen de deux rondelles parallèles 42 et 43, comprenant chacune un évidement interne 44, de manière à permettre, lorsque ces rondelles sont appliquées l'une sur l'autre et solidarisées par des vis 45 ou analogues, de serrer entre elles la gaine 11 de la fibre considérée, avant que l'ensemble ne soit mis en place dans le logement de réception 41 choisi.

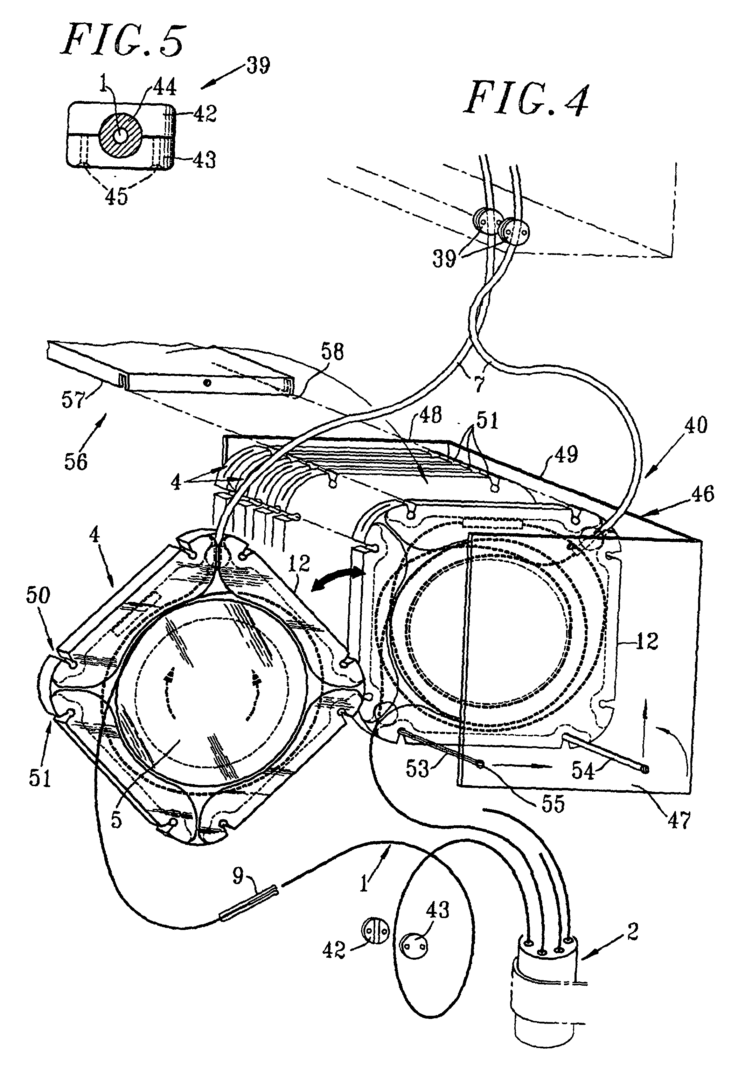

Revenant à la Figure 4, on voit comment peut être réalisé de façon relativement simple le dispositif de présentation 40 pour une pluralité de cassettes 4, disposées plan sur plan à l'intérieur d'une structure de support 46 qui, dans l'exemple représenté, comporte deux parois d'extrémité 47 et 48, parallèles l'une à l'autre et aux diverses cassettes 4 logées entre elles, ces deux parois étant réunies par un côté latéral 49.

Chacune des cassettes comporte dans ses quatre côtés extérieurs des encoches ouvertes 50 présentant de préférence un contour en oméga, avec une partie étroite légèrement évasée 51, ouverte vers l'extérieur et se raccordant, vers l'intérieur avec une partie circulaire 52.

Deux de ces encoches 50, prévues dans un des côtés des cassettes 4, notamment à la partie inférieure de ces dernières si elles sont disposées verticalement dans la structure de support 46, sont destinées à coopérer avec des tiges, respectivement 53 et 54, parallèles l'une à l'autre.

Ces tiges comportent chacune une partie 55 en forme de méplat, de manière à permettre leur passage dans la partie étroite 51 des encoches avant que, consécutivement à une rotation sur elle-même de 90° lorsqu'elles sont engagées dans la partie circulaire 52, ces tiges ne viennent immobiliser les cassettes.

Le maintien de l'ensemble de ces cassettes est enfin obtenu au moyen d'un couvercle 56 comportant des retours verticaux, respectivement 57 et 58, lesquels s'engagent dans les parties étroites 51 des deux encoches 50 prévues dans les côtés des boîtiers opposés à celui qui coopère avec les tiges 53 et 54.

Comme le montre également la Figure 4, on comprend que, lorsque les cassettes sont ainsi montées immobilisées dans la structure de support 46, il soit néanmoins extrêmement simple d'extraire l'une quelconque de celles-ci par enlèvement du couvercle 56, rotation de l'une des tiges 54 pour que son méplat 55 échappe à l'encoche 50, la cassette choisie pouvant être dans ces conditions basculée autour de l'autre tige 53 et finalement extraite indépendamment des autres cassettes, lorsque l'autre encoche échappe à son tour à la seconde tige.

Avantageusement, compte tenu du nombre élevé de cassettes susceptibles d'être montées dans la structure de support et par suite de la quantité de fibres optiques distinctes contenues individuellement dans ces cassettes, on fait comporter à chacune de ces fibres et/ou cassettes, un moyen de repérage approprié, pouvant selon le cas consister en une marque, un repère coloré, ou plus généralement par un signe permettant de les distinguer de l'une à l'autre en évitant les risques d'erreurs lors de leur manipulation.

On réalise ainsi une cassette pour le stockage et la protection de l'extrémité d'une fibre optique, de conception très simple et qui présente l'avantage de permettre à cette fibre de délivrer hors du boîtier de cette cassette, une surlongueur de fibres nécessaire à la réalisation d'une épissure de raccordement notamment, sans que le tirage de la fibre apte à délivrer la dimension correspondante ne risque de produire une contrainte de traction ou de flexion préjudiciable.

En effet, le montage en rotation sur lui-même du noyau central 5 et la prévision d'un lamage en creux 20 recevant la partie inférieure de ce noyau, évite tout effet de cabestan et de blocage de la fibre sur le noyau entre l'entrée et la sortie de cette fibre dans la cassette. En outre, la constitution particulière du couvercle de cette dernière permet d'y loger aisément l'épissure une fois celle-ci réalisée, en évitant de laisser à l'extérieur de la cassette la surlongueur précédemment utilisée.

A noter que la structure du couvercle 32 formé de ses quatre éléments souples, permet également, au lieu de tirer la fibre comme indiqué ci-dessus, de l'extraire à travers le jeu 31 qui en suivant le contour du noyau circulaire, épouse la forme de la fibre à l'intérieur du logement de la cassette.

L'ensemble réalisé présente une très faible épaisseur, notamment si la fibre optique contenue dans la cassette ne comporte aucune épissure. Dans le cas en revanche où une telle épissure est présente, par exemple pour raccorder deux fibres, le logement de la cassette est un peu plus large, l'épaisseur de celle-ci étant donc très légèrement supérieure.

Dans tous les cas, la cassette selon l'invention est simple à fabriquer, facile à utiliser, d'un prix de revient limité et permet un stockage rationnel d'un nombre élevé de cassettes, sans possibilité de confusion entre les diverses fibres aboutissant à chacune de ces cassettes individuellement. Avantageusement, les cassettes successives dans la structure de support commune peuvent être distinguées par des repères appropriés (numéros d'ordre, coloris, signes particuliers etc...), permettant de les extraire facilement et de les replacer ensuite, une fois l'intervention souhaitée effectuée.

Bien entendu, il va de soi que l'invention ne se limite pas à l'exemple plus spécialement décrit en référence aux dessins annexés ; elle en embrasse au contraire toutes les variantes. Notamment, dans le mode de réalisation selon la Figure 1, on a supposé que le deux fibres 1 et 7 étaient réunies par leurs extrémités 3 et 6 pour former l'épissure 9 ou 99. De plus, il est possible que les épissures aient des tailles toutes identiques ou différentes de l'une à l'autre, pour autant qu'elles restent compatibles avec l'encombrement de la cassette et les dimensions des cavités qui les reçoivent.

Il doit cependant être considéré que les mêmes dispositions peuvent être mises en oeuvre de façon identique si la fibre 1 par exemple n'est pas coupée, mais une fois sortie de la cassette avec la surlongueur nécessaire, elle est seulement dénudée sur une fraction de sa gaine pour permettre un raccordement avec l'autre fibre 7, en réalisant une piquage de celle-ci sur la première. Dans ce cas, on peut loger à l'intérieur de la cassette, comme l'épissure de liaison entre les extrémités de deux fibres de la façon décrite précédemment, le coupleur de raccordement correspondant.

## Revendications

1. Cassette pour le logement et la protection individuelle dune portion terminale d'une fibre optique unique (1) ou d'un ruban unitaire formé par une association de telles fibres, comportant un boîtier plat (12) présentant un fond (13) pourvu à sa périphérie d'un rebord (14) et au moins une entrée et au moins une sortie (15 à 18) pour ladite portion terminale de fibre ou de ruban, l'intérieur dudit boîtier plat contenant en son centre un noyau cylindrique (5) faisant saillie du fond du boîtier de façon à délimiter, entre la surface externe dudit noyau et le fond et le rebord périphérique du boîtier, un logement annulaire (19) pour le stockage de ladite portion terminale de fibre ou de ruban, laquelle est destinée à être enroulée librement autour dudit noyau cylindrique selon un nombre de tours suffisant pour fournir à l'extérieur du boîtier une surlongueur désirée (10) consécutivement à une traction exercée sur son extrémité (3) à l'extérieur dudit boîtier, ladite cassette étant **caractérisée en ce que** ledit noyau cylindrique (5) est monté tournant sur le fond du boîtier, autour d'un pivot central (25) perpendiculaire audit fond, et ledit fond (13) du boîtier comporte un lamage en creux (20) dans lequel pénètre la face inférieure du noyau tournant (5) avec un jeu latéral limité (22), notamment inférieur au demi-diamètre de la fibre (1), de façon à permettre, lors de l'extraction par tirage de ladite surlongueur désirée hors du boîtier, l'entraînement en rotation conjoint du noyau central et des tours d'enroulement se resserrant contre le noyau, et donc la libération d'un nombre donné de tours d'enroulement sur le noyau, tout en évitant tout blocage sur ledit noyau central desdits tours d'enroulement resserrés.

2. Cassette selon la revendication 1, **caractérisée en ce que** la face supérieure du noyau tournant est solidarisée d'un flasque plat (29), parallèle au fond (13) du boîtier et obturant partiellement par le dessus le logement annulaire (19) de réception de la fibre (1).

3. Cassette selon la revendication 2, **caractérisée en ce que** le rebord périphérique externe (14) du boîtier (12) comporte un couvercle plat annulaire (32), dirigé vers le pivot (25) du noyau tournant (5), sensiblement dans le plan du flasque (29) et délimitant avec le côté (30) de celui-ci un jeu d'espacement (31) suffisant pour permettre le passage de la fibre (1).

4. Cassette selon la revendication 3, **caractérisée en ce que** le boîtier (12) présente une section droite de forme carrée ou rectangulaire, le couvercle annulaire (32) étant formé de quatre éléments séparés (33 à 36), chacun de ces éléments étant disposé selon un des quatre côtés respectifs du boîtier, chaque élément de couvercle étant réalisé au moyen d'une languette souple de matière plastique, avantageusement transparente, comportant un bord extérieur circulaire (37) dirigé vers le centre du boîtier et s'étendant sensiblement parallèlement au côté (30) du flasque (29) porté par le noyau tournant (5).

5. Cassette selon la revendication 4, **caractérisée en ce que** le bord périphérique (14) du boîtier (12) comporte, dans chacun des quatre angles de celui-ci, un passage d'entrée et/ou de sortie (15 à 18) de la fibre (1) logée dans ce boîtier, ces passages étant disposés deux à deux selon les diagonales du boîtier.

6. Cassette selon la revendication 5, **caractérisée en ce que** les portions de raccordement (24) de chaque passage avec le logement de réception circulaire (19) de la fibre (1) à l'intérieur du boîtier (12) présentent un profil arrondi.

7. Cassette selon l'une quelconque des revendications 4 à 6, **caractérisée en ce que** le boîtier (12) comporte, à l'extérieur du logement de réception annulaire (19), selon ses côtés latéraux, des encoches ouvertes (50) vers l'extérieur, pour la fixation ou la suspension du boîtier.

8. Cassette selon la revendication 7, **caractérisée en ce que** les encoches (50) présentent un contour en oméga avec une partie étroite (51) vers l'extérieur, raccordée à une partie sensiblement circulaire (52) vers l'intérieur.

9. Cassette selon l'une quelconque des revendications 5 à 8, **caractérisée en ce que** chaque passage dans un angle du boîtier (12) comporte un évidement médian (41), sensiblement circulaire, pour le montage d'un organe de fixation (39) de la gaine externe (11) de la fibre (1).

10. Cassette selon la revendication 9, **caractérisée en ce que** l'organe de fixation (39) est constitué de deux rondelles plates circulaires (42, 43), serrant la gaine (11) plan sur plan et maintenues l'une contre l'autre par des vis (45) ou analogues.

11. Cassette selon l'une quelconque des revendications 4 à 9, **caractérisée en ce que**, pour loger une épissure (9) ou un coupleur de raccordement de la fibre optique (1) avec une autre fibre (7), le logement de réception circulaire (19) comporte, à l'intérieur du boîtier (12), contre la face interne du rebord périphérique (14) de celui-ci, au moins une zone rectiligne allongée (23) pour la mise en place de cette épissure, introduite dans le boîtier sous la languette souple formant l'élément correspondant du couvercle (32).

12. Cassette selon la revendication 11, **caractérisée en ce que** la languette du couvercle comporte des pattes (38), en saillie vers l'intérieur du logement de réception circulaire (19), pour immobiliser l'épissure (9) de raccordement dans le boîtier (12), contre la zone rectiligne (23).

13. Cassette selon l'une quelconque des revendications 4 à 9, **caractérisée en ce que** le noyau cylindrique (5) supporte à sa périphérie, au voisinage du logement de réception circulaire (19), des épissures (99) de raccordement entre deux fibres dont les extrémités sont engagées à l'intérieur du boîtier (12).

14. Installation pour le stockage de fibres optiques ou de rubans unitaires formés par une association de telles fibres, comportant une pluralité de cassettes selon la revendication 7, ainsi qu'un dispositif de stockage ou de support desdites cassettes, **caractérisée en ce qu'**elle comporte au moins une tige de support (53, 54) de ces cassettes, qui traverse les encoches homologues (50) de leurs boîtiers (12) respectifs afin de les solidariser entre eux plan sur plan, sans entraver la possibilité de basculement de l'un quelconque de ceux-ci autour de cette tige de support.

15. Installation selon la revendication 14, dans sa dépendance avec la revendication 8, **caractérisé en ce que** la tige de support (53, 54) comporte un méplat (55) permettant de bloquer les cassettes pour une position de la tige à l'intérieur de l'évidement médian (52) des encoches (50) en oméga ou bien d'autoriser l'échappement de cette tige vis-à-vis de ces encoches dans une autre position perpendiculaire à la première, dans laquelle le méplat s'engage dans la partie étroite (51) vers l'extérieur des encoches.

16. Installation selon l'une des revendications 14 ou 15, **caractérisé en ce qu'**il comporte des moyens de verrouillage des cassettes, notamment constitués par un couvercle (56) disposé selon le côté opposé des boîtiers (12), ce couvercle comportant des retours perpendiculaires (57, 58), propres à s'engager dans les parties étroites des encoches (50), prévues dans ce côté opposé.

17. Installation selon l'une quelconque des revendications 14 à 16, **caractérisé en ce que** chaque fibre et/ou cassette comporte un moyen de repérage et d'identification individuel.

## Claims

1. Cassette for the housing and individual protection of a terminal portion of a single optical ribre (1) or unitary ribbon formed by an association of such fibres, comprising a flat casing (12) having a base (13) provided with a rim (14) at its periphery and at least one inlet and at least one outlet (15 to 18) for said terminal portion of fibre or ribbon, the interior of said flat casing containing, in its centre, a cylindrical core (5) projecting from the base of the casing so as to delimit, between the external surface of said core and the base and the peripheral rim of the casing, an annular recess (19) for the storage of said terminal portion of fibre or ribbon to be wound freely round said cylindrical core with an adequate number of turns to provide a desired excess length at the exterior of the casing as the result of a pull exerted on its end (3) at the exterior of said casing, said cassette being **characterised in that** said cylindrical core (5) is mounted rotatably on the base of the casing round a central pivot (25) perpendicular to said base and said base (13) of the casing comprises a recessed facing (20) in which the lower face of the rotating core (5) penetrates with limited lateral play (22), in particular smaller than half the diameter of the fibre (1), so as to allow, during extraction by pulling said desired excess length out of the casing, the combined setting into rotation of the central core and the wound turns tightening against the core and therefore the release of a given number of wound turns on the core while avoiding blocking of said tightened wound turns on said central core.

2. Cassette according to claim 1, **characterised in that** the upper face of the rotating core is integrally connected to a flat plate (29) parallel to the base (13) of the casing and partially occluding the top of the annular housing (19) for receiving the fibre (1).

3. Cassette according to claim 2, **characterised in that** the external peripheral rim (14) of the casing (12) comprises an annular flat cover (32) directed toward the pivot (25) of the rotating core (5) substantially in the plane of the plate (29) and delimiting, with the side (30) thereof, a clearance (31) which is sufficient to allow the passage of the fibre (1).

4. Cassette according to claim 3, **characterised in that** the casing (12) has a square or rectangular cross-section, the annular cover (32) being formed by four separate elements (33 to 36), each of these elements being disposed on one of the four respective sides of the casing, each cover element being produced by means of a flexible tongue which is made of plastics material, is advantageously transparent and comprises a circular external edge (37) directed toward the centre of the casing and extending substantially parallel to the side (30) of the plate (29) carried by the rotating more (5).

5. Cassette according to claim 4, **characterised in that** the peripheral edge (14) of the casing (12) comprises, in each of the four corners thereof, an inlet and/or outlet passage (15 to 18) for the fibre (1) housed in this casing, these passages being disposed in pairs along the diagonals of the casing.

6. Cassette according to claim 5, **characterised in that** the portions (24) for connecting each passage to the circular recess (19) for receiving the fibre (1) inside the casing (12) have a rounded profile.

7. Cassette according to any of claims 4 to 6, **characterised in that** the casing (12) comprises, at the exterior of the annular receiving recess (19), along the lateral sides thereof, outwardly open notches (50) for the fixing or suspension of the casing.

8. Cassette according to claim 7, **characterised in that** the notches (50) have an omega-shaped contour with a straight portion (51) toward the exterior connected to a substantially circular portion (52) toward the interior.

9. Cassette according to any of claims 5 to 8, **characterised in that** each passage in a corner of the casing (12) comprises a substantially circular median opening (41) for the fitting of a fixing means (39) for the external sheaf (11) of the fibre (1).

10. Cassette according to claim 9, **characterised in that** the fixing means (39) consists of two flat circular washers (42, 43) gripping the sheaf (11) plane on plane and held one against the other by screws (45) or the like.

11. Cassette according to any of claims 4 to 9, **characterised in that**, to house a splice (9) or a coupler for connecting the optical fibre (1) to a further fibre (7), the circular receiving recess (19) comprises, inside the casing (12), against the internal face of the peripheral rim (14) thereof, at least one elongate rectilinear zone (23) for the installation of this splice which is introduced into the casing beneath the flexible tongue forming the corresponding element of the cover (32).

12. Cassette according to claim 11, **characterised in that** the tongue of the cover comprises lugs (38) which project toward the interior of the circular receiving recess (19) to immobilise the connecting splice (9) in the casing (12) against the rectilinear zone (23).

13. Cassette according to any of claims 4 to 9, **characterised in that** the cylindrical cure (5) supports, at its periphery, in the vicinity of the circular receiving recess (19), splices (99) for connection between two fibres of which the ends are engaged inside the casing (12).

14. Installation for storing optical fibres or unitary ribbons formed by an association of such fibres, comprising a plurality of cassettes according to claim 7 as well as a device for storing or supporting said cassettes, **characterised in that** it comprises at least one support rod (53, 55) for these cassettes which passes through the homologous notches (50) of the respective casings (12) thereof so as to connect them to one another plane on plane without impeding the possibility of any one of them swinging round this support rod.

15. Installation according to claim 14 in its dependency on claim 8, **characterised in that** the support rod (53, 54) comprises a flattened region (55) for locking the cassettes in a position of the rod inside the median opening (52) of the omega-shaped notches (50) or allowing the release of this rod from these notches in another position perpendicular to the former position, in which the flattened region engages in the narrow portion (51) toward the exterior of the notches.

16. Installation according to any of claims 14 or 15,
**characterised in that** it comprises means for locking the cassettes, in particular consisting of a cover (56) disposed on the opposite side of the casings (12), this cover comprising perpendicular returns (57, 58) capable of engaging in the narrow portions of the notches (50) provided in this opposing side.

17. Instal iation according to any of claims 14 to 16, **characterised in that** each fibre and/or cassette comprises an individual labelling and identification means.

## Patentansprüche

1. Kassette für die Unterbringung und den Einzelschutz eines Endabschnitts einer optischen Einzelfaser (1) oder einer von einer Vereinigung solcher Fasern gebildeten Bandeinheit mit einem flachen Gehäuse (12) mit einem Boden (13), der an seinem Umfang mit einem Randanschlag (14) und mindestens einem Einlaß und mindestens einem Auslaß (15 bis 18) für den Endabschnitt der Faser oder des Bandes versehen ist, wobei das Innere des flachen Gehäuses in seiner Mitte einen zylindrischen Kern (5) enthält, der vom Boden des Gehäuses so vorspringt, daß er zwischen der Außenfläche des Kerns und dem Boden und dem Umfangs-Randanschlag des Gehäuses eine ringförmige Aufnahme (19) für die Unterbringung des Endabschnitts der Faser oder des Bandes begrenzt, wobei die Faser oder das Band dazu bestimmt sind, daß sie um den zylindrischen Kern mit einer genügenden Zahl von Windungen frei gewickelt werden, um außerhalb des Gehäuses eine gewünschte Überlänge (10) zu liefern, nachdem auf ihr Ende (3) außerhalb des Gehäuses ein Zug ausgeübt wurde, wobei diese Kassette **dadurch gekennzeichnet ist, daß** der zylindrische Kern (5) am Boden des Gehäuses um einen zum Boden senkrechten Mittelzapfen (25) drehbar montiert ist und der Boden (13) eine hohle Senkung (20) aufweist, in welche die Unterseite des drehbaren Kerns (5) mit einem begrenzten seitlichen Spiel (22) eindringt, das besonders kleiner als der halbe Durchmesser der Faser (1) ist, so daß beim Herausziehen der gewünschten Überlänge aus dem Gehäuse durch Ziehen das gemeinsame drehende Antreiben des Mittelkerns und der sich gegen diesen Kern festziehenden Windungen die Freisetzung einer gegebenen Zahl von Windungen auf dem Kern ermöglicht, wobei jede Blockierung der auf dem Mittelkern festgezogenen Windungen vermieden wird.

2. Kassette nach Anspruch 1, **dadurch gekennzeichnet, daß** die Oberseite des drehbaren Kerns fest mit einem ebenen Flansch (29) verbunden ist, der parallel zum Boden (13) des Gehäuses verläuft und die ringförmige Aufnahme (19) zur Unterbringung der Faser (1) teilweise von oben abdeckt.

3. Kassette nach Anspruch 2, **dadurch gekennzeichnet, daß** der Umfangs-Randanschlag (14) des Gehäuses (12) einen ebenen ringförmigen Deckel (32) aufweist, der zum Zapfen (25) des drehbaren Kerns (5) gerichtet ist, im wesentlichen in der Ebene des Flansches (29) verläuft und mit der Seite (30) des Flansches einen Zwischenraum (31) begrenzt, der für den Durchtritt der Faser (1) ausreicht.

4. Kassette nach Anspruch 3, **dadurch gekennzeichnet, daß** das Gehäuse (12) einen quadratischen oder rechteckigen Querschnitt aufweist, der ringförmige Deckel (32) aus vier getrennten Elementen (33 bis 36) gebildet ist, wobei jedes dieser Elemente an einer der vier jeweiligen Seiten des Gehäuses angeordnet ist und jedes Element des Deckels mit einer nachgiebigen Zunge aus einem vorteilhafterweise transparenten Kunststoffmaterial ausgebildet ist, die einen kreisförmigen, zur Mitte des Gehäuses gerichteten Außenrand (37) aufweist, der sich im wesentlichen parallel zur Seite (30) des vom drehbaren Kern (5) getragenen Flansches (29) erstreckt.

5. Kassette nach Anspruch 4, **dadurch gekennzeichnet, daß** der Umfangs-Randanschlag (14) des Gehäuses (12) in jeder seiner vier Ecken einen Eintrittsdurchlaß und/oder Austrittsdurchlaß (15 bis 18) der in diesem Gehäuse untergebrachten Faser (1) aufweist, wobei diese Durchlässe zwei und zwei gemäß den Diagonalen des Gehäuses angeordnet sind.

6. Kassette nach Anspruch 5, **dadurch gekennzeichnet, daß** die Anschlußabschnitte (24) jedes Durchlasses zu der kreisförmigen Aufnahme (19) der Faser (1) im Inneren des Gehäuses (12) hin ein abgerundetes Profil aufweisen.

7. Kassette nach einem der Ansprüche 4 bis 6, **dadurch gekennzeichnet, daß** das Gehäuse (12) außerhalb der ringförmigen Aufnahme (19) an seinen Seitenkanten nach außen offene Kerben (50) für die Befestigung oder Aufhängung des Gehäuses aufweist.

8. Kassette nach Anspruch 7, **dadurch gekennzeichnet, daß** die Kerben (50) einen Omega-Umriß mit einem nach außen gerichteten engen Teil (51) aufweisen, an den sich nach innen ein im wesentlichen kreisförmiger Teil (52) anschließt.

9. Kassette nach einem der Ansprüche 5 bis 8, **dadurch gekennzeichnet, daß** jeder Durchlaß in einer Ecke des Gehäuses (12) eine im wesentlichen kreisförmige in der Mitte gelegene Ausnehmung (41) für die Montage eines Elements zur Befestigung (39) des Außenmantels (11) der Faser (1) aufweist.

10. Kassette nach Anspruch 9, **dadurch gekennzeichnet, daß** das Befestigungselement (39) aus zwei ebenen kreisförmigen Platten (42, 43) besteht, welche den Mantel (11) eben auf eben einspannen und durch Schrauben (44) oder dergleichen gegeneinander gehalten sind.

11. Kassette nach einem der Ansprüche 4 bis 9, **dadurch gekennzeichnet, daß** zum Unterbringen einer Spleißung (9) oder einer Verbindungskopplung der optischen Faser (1) mit einer anderen Faser (7) die kreisförmige Aufnahme (19) im Inneren des Gehäuses (12) gegen die Innenseite des Umfangs-Randanschlags (14) desselben mindestens eine gerade längliche Zone (23) zum Anordnen diese Spleißung aufweist, die in das Gehäuse unter die das entsprechende Element des Deckels (32) bildende nachgiebige Zunge eingeführt wurde.

12. Kassette nach Anspruch 11, **dadurch gekennzeichnet, daß** die Zunge des Deckels zum Inneren der kreisförmigen Aufnahme (19) vorspringende Finger (38) aufweist, um die Verbindungsspleißung (9) im Gehäuse (12) gegen den geraden Bereich (23) festzuhalten.

13. Kassette nach einem der Ansprüche 4 bis 9, **dadurch gekennzeichnet, daß** der zylindrische Kern (5) an seinem Umfang in der Nähe der kreisförmigen Aufnahme (19) Verbindungsspleißungen (99) zwischen zwei Fasern trägt, deren Enden in das Innere des Gehäuses (12) eingreifen.

14. Anordnung zur Unterbringung von optischen Fasern oder Bandeinheiten, die von einer Vereinigung solcher Fasern gebildet sind, mit einer Mehrzahl von Kassetten nach Anspruch 8, sowie mit einer Vorrichtung zur Lagerung oder Halterung dieser Kassetten, **dadurch gekennzeichnet, daß** sie mindestens eine Haltestange (53, 54) für diese Kassetten aufweist, welche homologe Kerben (50) ihrer jeweiligen Gehäuse (12) durchsetzt, um diese miteinander eben auf eben fest zu verbinden, ohne die Möglichkeit zu behindern, irgendeine der Kassetten um diese Tragstange zu schwenken.

15. Anordnung nach Anspruch 14 in Abhängigkeit von Anspruch 8, **dadurch gekennzeichnet, daß** die Tragstange (53, 54) eine Abflachung (55) aufweist, welche es ermöglicht, die Kassetten bei einer Stellung der Stange im Inneren der mittleren Ausnehmung (52) der Omega-förmigen Kerben (50) zu blockieren oder den Austritt dieser Stange aus diesen Kerben in einer anderen, zur ersten senkrechten Stellung der Stange zu ermöglichen, in der die Abflachung in den von den Kerben nach außen gerichteten engen Teil (51) eingreift.

16. Anordnung nach einem der Ansprüche 14 oder 15, **dadurch gekennzeichnet, daß** sie eine Vorrichtung zur. Verriegelung der Kassetten aufweist, die besonders aus einem Deckel (56) besteht, der auf der gegenüberliegenden Seite der Gehäuse (12) angeordnet ist, wobei dieser Deckel senkrechte Rücksprünge (57, 58) aufweist, welche in die engen Abschnitte von Kerben (50) eingreifen können, die auf dieser entgegengesetzten Seite vorgesehen sind.

17. Anordnung nach einem der Ansprüche 14 bis 16, **dadurch gekennzeichnet, daß** jede Faser und/oder Kassette ein Mittel zur Markierung und Einzelidentifizierung aufweist.
